Europäisches Patentamt

European Patent Office

Office européen des brevets

(19)

(11) **EP 1 410 723 A1**

## (12) EUROPEAN PATENT APPLICATION
published in accordance with Art. 158(3) EPC

(43) Date of publication:
**21.04.2004 Bulletin 2004/17**

(21) Application number: **01969821.6**

(22) Date of filing: **26.09.2001**

(51) Int Cl.7: **A23N 15/12**

(86) International application number:
**PCT/ES2001/000358**

(87) International publication number:
**WO 2002/026063 (04.04.2002 Gazette 2002/12)**

(84) Designated Contracting States:
**AT BE CH CY DE DK ES FI FR GB GR IE IT LI LU MC NL PT SE TR**

(30) Priority: **28.09.2000 ES 200002340**

(71) Applicant: **Hipema Inversiones, S.L.**
**31340 Marcilla (Navarra) (ES)**

(72) Inventor: **URTASUN ABARZUZA, José Maria**
**E-31340 Marcilla (Navarra) (ES)**

(74) Representative: **Intès, Didier Gérard André et al**
**Cabinet Beau de Loménie,**
**158, rue de l'Université**
**75340 Paris Cedex 07 (FR)**

(54) **VEGETABLE CUTTING MACHINE AND CUTTING METHOD OBTAINED WITH SAID MACHINE**

(57)     The invention relates to a vegetable cutting machine and cutting method obtained with said machine, such as those used in trimming and/or chopping of vegetables, the vegetables being moved forward longitudinally aligned on tracks of conveyor belts (3 and 5) of said machine. A group of cutting heads (1) using a high pressure water jet is disposed on the conveyor (3). Each track has its won cutting head (1). A linear TV camera (6) is paced in front of said group of cutting heads (1), said camera scanning the width and length of the vegetables and the separation between them. By means of the corresponding electronic devices, it commands the motors (1.8) of the cutting heads and a motor (3.1) pertaining to the conveyor (3) so that the high pressure water jet of each cutting head (1) trims the vegetable, if required, and cuts the vegetable into a whole number of equal pieces, the size of said pieces being the closest possible to a target size.

Fig. 1

**Description**

There are different kinds of vegetables, which have to be cut during their manipulation process, so as to prepare them for human consumption; so that in long vegetables it is usual to have to trim and chop them to certain previously determined sizes.

An example of this is the preparation of green beans for their subsequent freezing and/or conservation process. In fact, to trim and chop the green beans, up to now the use of a set of machines and devices were used; so that they started from a green bean container from which through the corresponding conveyors and scoop elevators, the green beans were carried to a pneumatic cleaning area, where a counter-current flux was generated, by means of an axial blower, which gave rise to the separation of the light weight particles such as twigs, straw, etc... From that green bean area it was discharged into a cyclone washing machine, at whose lower part the stones and solid particles came out; while at the upper part the water with the green beans overflowed and went to a vibrating conveyor, which separated the green beans from the water. From there, the green beans were fed into a washing machine where they were cleaned by means of water jets, passing through a conveyor with holes towards the cluster separating device; from there the green beans went to a vibrator and a elevator conveyor which carried the green beans to the end cutting devices, finally passing on to the cutting drums and from there to a final fragment cleaning sector.

This conventional process, described in its general sequence, has some serious inconveniences, such as:

- The great space required by the whole set of devices, conveyors and machines to carry this out.
- The ever smaller yield. In fact, more and more different varieties of green beans are produced, which joined to the fact that the harvesting is not carried out in a manual way any more, but it has been mechanized, determines different and multiple variables which are translated in a lower yield of these trimming-chopping devices they go through, for example, in a machine which before was able to process 1500 kg per hour, with a 98 % yield, now with the same machine 800 kg are processed, with a production of 80 %.
- The fact that the used cutting devices, both for trimming and for chopping, are blades which become blunt with their use in time, which affects the output seriously; while at the same time in the case a stone or a foreign element with enough hardness enters the process with the green beans and reaches the blades, the latter are deteriorated significantly.
- The cutting measure is a direct function of the separation between the mentioned cutting means, which brings about that only chopping within some very limited sizes can be carried out and to change a machine prepared for a certain size to another one, it is necessary to stop the machine and modify the disposition of its cutting means to the new size, which implies great stopping times of the cutting process and of the whole process in general.
- Moreover, the separation between the cutting blades was established from a previously determined measure and their successive multiples; so that it is practically impossible that a green bean could be divided in an exact number of fragments so that there were always unusable remnants.

In view of these inconveniences, the object of the present preconized invention is a vegetable cutting machine which, as it can be seen hereafter, solves the previously indicated inconveniences, giving rise to a new cutting process which improves essentially all the ones known up to now.

According to the present invention, the vegetables to be trimmed and to be chopped, are situated on a vibrating conveyor which places the mentioned vegetables in a series of parallel tracks, lined up one after the other, with a previously established separation for these vegetables, which, continuing with the previous example, can be green beans to be trimmed and chopped, as a practical not limiting application example.

There is a cutting head at each path.

At the entrance area of the machine there is a linear television camera which captures the length and the section of each green bean in each track, as well as the separation between two successive green beans; so that this information, through the corresponding electronic device and some computers, establishes which is to be the speed of both the cutting header motion means and of the conveyor which carries the green beans towards these cutting headers.

The cutting headers operate by means of a high pressure water jet. The cutting high pressure water jet, though a programme, trims of the green bean and chops it according to the previously established sections and dimensions; so that when each green bean leaves the cutting header area its end is already trimmed and it has been chopped, ready to pass on to the subsequent processes.

With this solution, all the previously mentioned inconveniences are eliminated, as the encumbrance and complexity of the machine is significantly reduced; while at the same time the progressive blunting of the cutting means and the risk of breakage of the cutting means due to stones or solid particles is avoided as they are made up of a high pressure water jet. With the programme it has also become possible to change the cutting size according to the needs in function of the features and/or variety of the vegetable to be cut; all of which in a fast almost immediate way, without having to stop the production process. It also improves the production, increasing its yield considerably.

On the other hand as now the cutting size of each green bean can be established, the size of each green bean is divided into an exact number of fragments, without originating unusable remnants.

What is more, apart from eliminating all the previously described inconveniences, the tests carried out with the machine object of the present invention show that with the traditional machines, during the cutting process the vegetable fibres were broken, so that the green bean lost liquid and oxidated fast, now the loss of liquid is much less and in consequence its oxidation is much slower.

The machine and the cutting method, objects of the present invention, can be used to cut any vegetables, in all their variants, such as trimming, calibrating their longitudinal size, fragmenting, etc... And it can also be used for any long vegetables susceptible of being cut during its manipulation processes.

Figure 1 shows a view in schematic perspective of the machine object of the present invention, which has been represented according to a non limiting practical realization example.

Figure 2 is a view in elevation of the machine shown in Figure 1.

Figure 3 corresponds to a view in upper plant of figure 2.

Figure 4 is a view in perspective which shows the disposition of the cutting headers (1).

Figure 5 shows a view in upper plant corresponding to figure 4.

Figure 6 shows a front elevation view of figure 5.

Figure 7 shows a profile of figure 6.

Figure 8 shows the longitudinal section of the cutting header (1).

Figure 9 shows an exploded perspective in the assembly phase of the different components of the cutting header (1).

Figure 10 shows schematically the electronic part of the machine object of the present invention.

Figure 11 shows both diagrams, for a better understanding of the control logic of the passage of the vegetables to be cut.

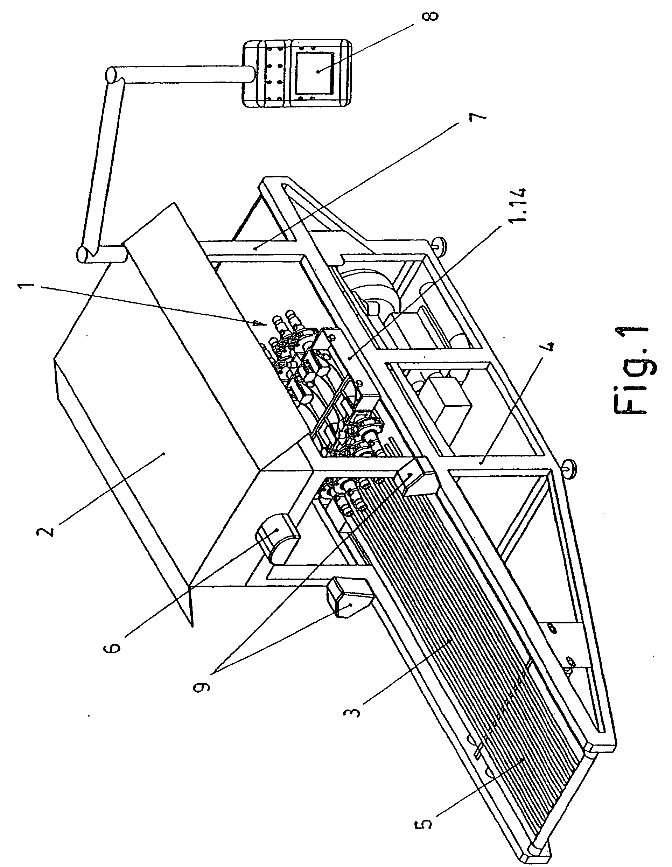

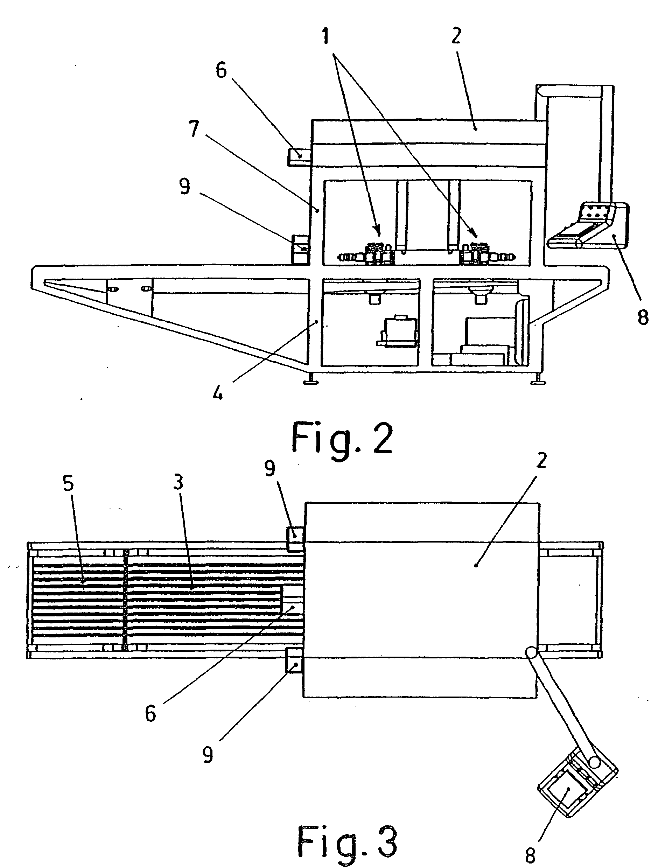

The object of the present invention is a machine dedicated to the cutting of vegetables and the cutting method reached with said machine. In the way it can be appreciated on figures 1, 2 and 3, the basic elements of the machine are some cutting headers (1), situated above the conveyor (3) which, together with the former, are situated in a general framework (4).

At the front of the framework (4) a first conveyor (5) is situated; while just in front of the cutting headers (1) a linear television camera (6) is situated at the upper part (2) of a structure (7); the existence of some spotlights (9) which illuminate the area focused by the linear camera (6) can be appreciated on figures 1, 2 and 3.

Structure (7) covers the cutting headers (1) and above them a closed area is defined to hold the corresponding electronic elements, starting at that upper part of the structure (7) an articulated arm with the corresponding command desk (8) for the operator.

In front of the machine a vibrating conveyor is situated, which has not been represented so as not to complicate the drawings unnecessarily, being the mentioned vibrating conveyor a conventional device, made up of a series of tracks in "V" profile; so that by the vibrations of the conveyor, the green beans are situated in the vertex or lower channel of the mentioned tracks, situating one green bean after the other, lining them up longitudinally.

Along each track of the vibrating conveyor, the machine shows a cutting header (1); so that according to the represented practical realization of figures 1, 2 and 3, as a non limiting realization example, the machine shows ten cutting headers (1) and the vibrating conveyor will in turn be made up of ten "V" profile tracks, each of which will remain faced to one of the ten cutting headers (1), but of course the number of cutting headers (1) can be increased or reduced, without altering in anything the essentials of the present invention.

From the vibrating header, the green beans are situated on the conveyor (5) which in turn will be sub-divided in as many tracks as there are vibrating headers, i.e. in the present case in ten channels or tracks, the same as the conveyor (3).

The forward speed of the conveyors (3) and (5) is different so that, playing with these speeds, what is reached is that the green beans are separated one from the other, so that when they reach the entrance area, where the linear camera (6) is situated, the green beans are adequately separated.

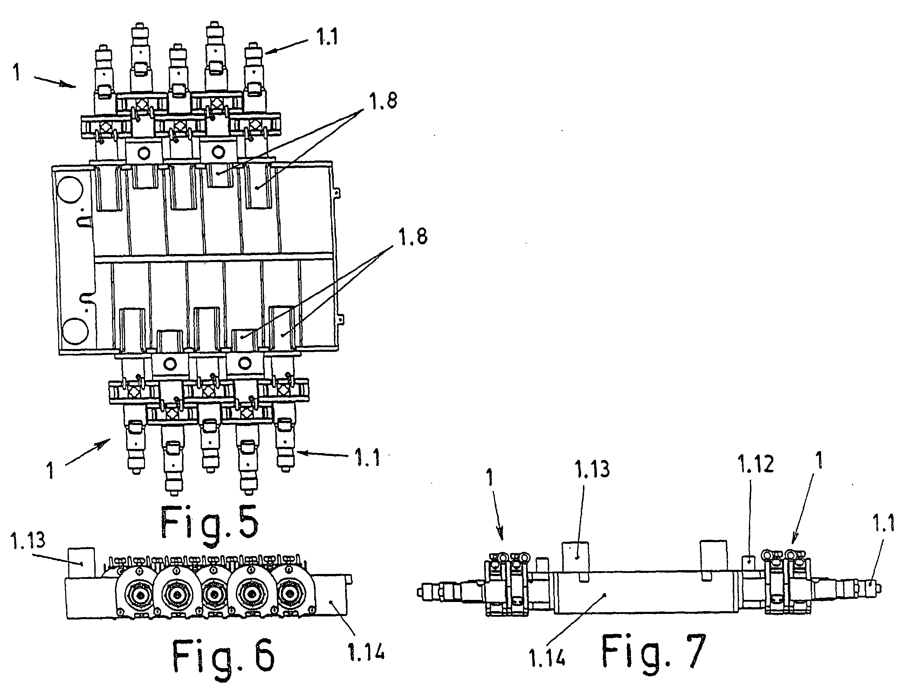

In the way it can be appreciated on figures 1, 4, 5, 6 and 7, the cutting headers (1) are situated according to two staggered groups of five headers (1) each; each group is mounted at the side of a frame in the way of a box (1.14), in a disposition thought to occupy the least possible space, but it has to be understood as being only a non limitative practical realization example.

Each cutting header (1) presents at one end its corresponding driving engine (1.8) and at the opposite end, a rotary high pressure coupling (1.1), which can operate at about 3000 bar.

A corresponding high pressure water pipe reaches each of the mouths of these rotary couplings (1.1), the mentioned pipes have not been represented so as not to hinder the cutting header view. The ten high pressure water pipes which reach the rotary couplings (1.1), converge into a common tap, where the existence of the corresponding filter is foreseen.

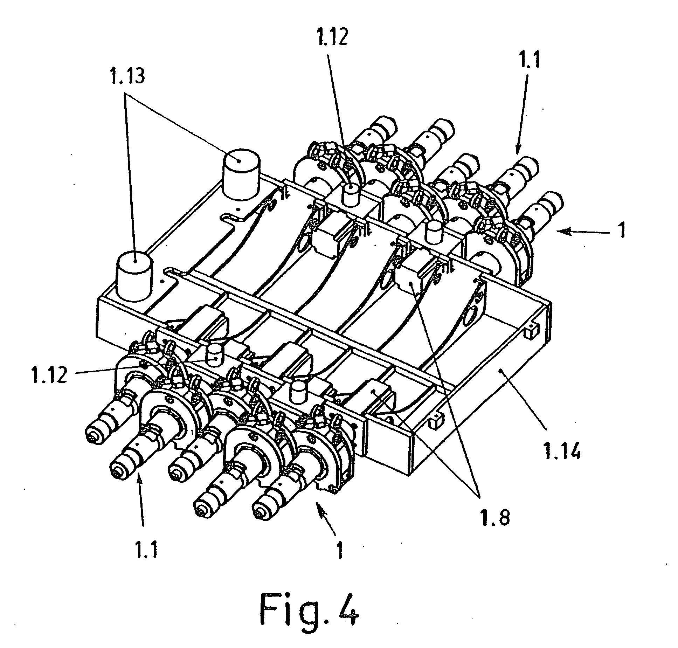

On figures 4, 5, 6 and 7 it can be appreciated how the engines (1.8) are housed in the frame (1.14), having foreseen some entrances, indicated with reference (1.12), through which refrigerated air coming from some outlet nozzles (1.13) enters, to dissipate the heat generated by the engine (1.8) operation.

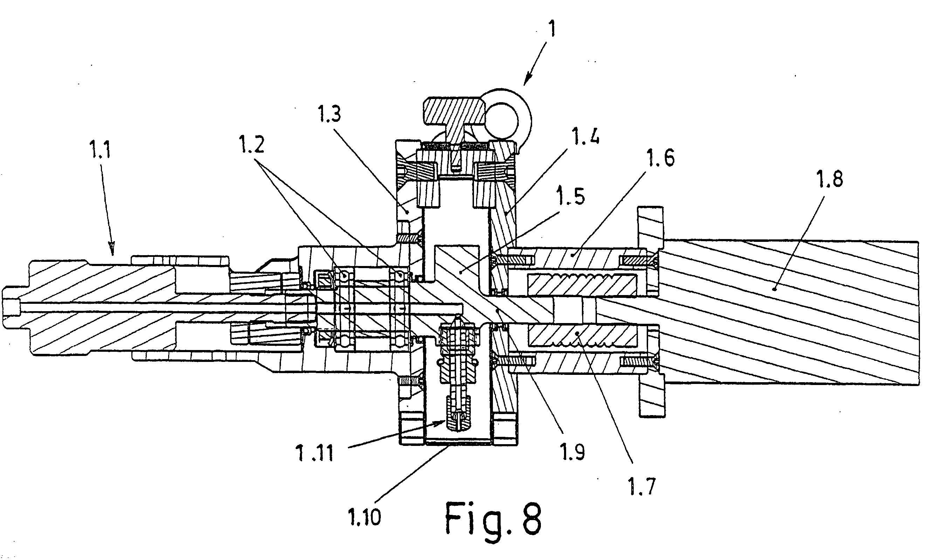

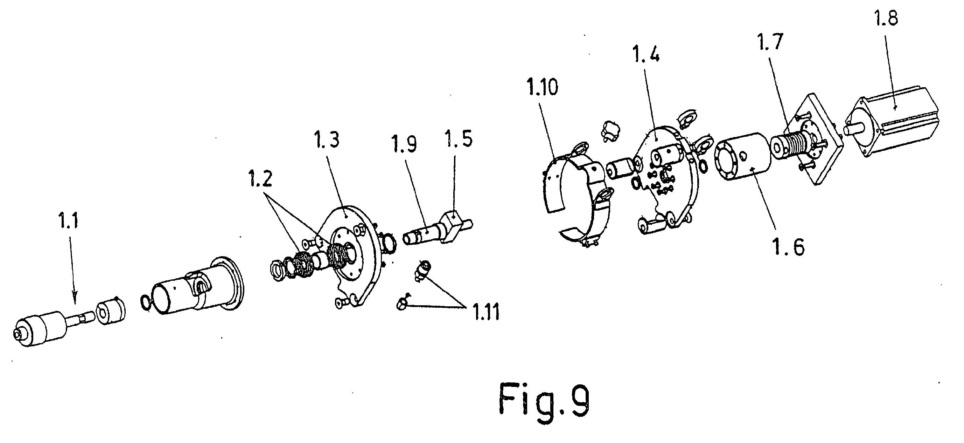

Figures 8 and 9 represent a possible preferential practical realization example of each of the cutting headers (1). According to this non limitative realization example, each header (1) is made up of the already mentioned rotary coupling (1.1) which is connected to a spinning central body (1.9), with the incorporation of the corresponding roller bearings (1.2) between the spinning part and the static one.

The spinning central body (1.9) is situated between two half-covers (1.3) and (1.4) and is made up of the corresponding nozzle (1.11), which stands out radially; in the way that through the nozzle (1.11) a high pressure water jet leaves to cut the vegetable. In diametral counter-position to the nozzle (1.11) there is a counter-weight (1.5).

Even though only one nozzle (1.11) has been represented, being this the preferential solution, it has been foreseen that cutting headers (1) with more than one nozzle (1.11) each can be built.

The central body (1.9) shows an expansion that penetrates into an elastic coupling (1.7), through which the mentioned central body (1.9) remains connected to the engine (1.8).

In the way it can be appreciated on figure 8, the elastic coupling (1.7) is situated inside a cylindric cap (1.6) which at one end is fixed to the half-cover (1.4) and at the other end to the corresponding engine frame (1.8).

It is worth mentioning as an important feature of the present invention that in the cutting area, where the water under pressure dart is going to operate, the existence of at least one suction opening has been foreseen for each track, being the mentioned openings communicated with a common suction unit for all the tracks. The function of these openings is to create suction able to actuate through the conveyor (3) and hold the green bean exactly when its cutting is caused by the high pressure water jet. This way the green bean is held against the conveyor (3) avoiding the movement of the green bean by the high pressure water jet, which would alter the cutting precision. What is more, during the tests carried out it has been verified that this suction not only duly holds the green bean during its cutting and even after the cutting, but it also creates the suction of the water particles that splash at that moment, leaving this way the cutting area "clean".

With all this situated in the indicated way, it is fulfilled that when the engine (1.8) operates, the central body (1.9) turns and with it the nozzle (1.11); so that in each complete rotation of the body (1.9), a cutting is produced by the dart of water under pressure which leaves the nozzle (1.11). Between the two half-covers (1.3) and (1.4) a protecting frame (1.10) is situated, against which the dart of water under pressure impacts when it does not pass through the cutting area, having foreseen that this protecting frame (1.10), even though it is built in a highly resistant material, can be substituted in a simple way when it is deteriorated by the action of the mentioned dart of water under pressure.

During the tests carried out the central spinning body (1.9) has worked at about two thousand r.p.m. (2000 r. p.m.); so that the dart of water under pressure carried out two thousand shears per minute, with highly satisfactory results.

The engines (1.8) can be both servo-engines and step by step engines, in function of the inertias during the rotation of each practical execution of the machine.

As one of the features of this invention, which eases up a lot the control of these engines (1.8) and their synchronization with the corresponding engine (3.1) of the conveyor (3), it has been foreseen that the movement of the whole is controlled though the generation of pulses, with a direct relationship between the number of pulses received from the electronic control module of each engine (1.8) and (3.1) and its rotated angle as an answer.

In this way, the transmission of when and how much it has to rotate is reached, achieving an effective control of its position by the number of pulses sent and of its speed by the frequency of the mentioned pulses. If frequencies with a uniform value are used, as it is the case in the presented realization example, there will always have to be a position control with closed loop; while if the pulse generation frequency were able to change in a continuous way and the inertia were low, a step by step engine could be used with open loop.

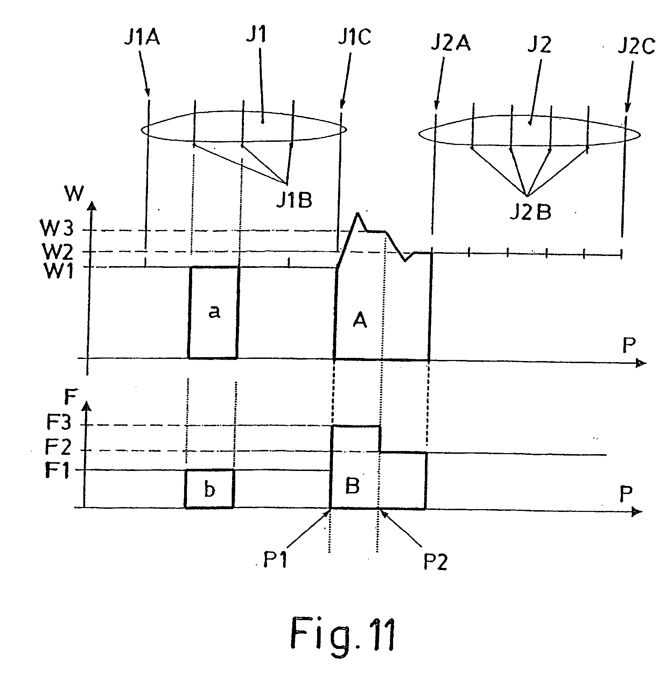

To understand the control logic of the cutting system more easily, two diagrams have been shown on figure 11; so that in the ordinate axis of the upper diagram the real angular speed "W" is represented and in the abscissa the steps "P" of the conveyor (3) encoder, these steps are equivalent to time.

In the lower diagram, the abscissa also represent the steps "P" of the conveyor (3) encoder; while on the ordinate the command frequency "F" of the cutting header (1) is represented, the references indicated in these diagrams are:

J1: Green bean 1
J2: Green bean 2
W: Real angular speed

W3: Manoeuvre angular speed
W2: Own angular speed for green bean J2
W1: On angular speed for green bean J1
P: Steps of the conveyor (3) encoder which is equivalent to time
F: Command frequency of the header
F3: Intermediate manoeuvre frequency
F2: Frequency corresponding to green bean J2
F1: Frequency corresponding to green bean J1
A: Area corresponding to a complete rotation of the cutting header (1)
B: Area corresponding to the number of pulses equivalent to one rotation of the cutting header (1).

Above the upper diagram, both green beans are represented, indicated with references J1 and J2; so that with references J1A and J1C the end trimmed is indicated, corresponding to the beginning and the end of green bean J1; while with reference J1B the chopping cuts are indicated and in the same way, referring to green bean J2, references J2A and J2C are the end trimmed, corresponding J2A with the beginning of green bean J2; while with reference J2B the chopping cuttings are indicated.

The command frequency "F" should have a minimum value high enough for the frequency transition corresponding to the cutting of one green bean to the frequency of another different green bean to be different, the loss of pulses can be considered negligible and for the rotation speed of the engines to be smooth and uniform for each given frequency. Satisfactory tests have been carried out using a central frequency of 100 KHz for 30 mm cuttings at a speed of one metre per second of conveyor (3), which is equivalent to one rotation of the cutting header (1) at around 2000 r.p.m. This command frequency "F" allows enough margin to reduce the speed during manoeuvres without compromising the operation smoothness and precision.

As the objective is to trim of each green bean and fraction it subsequently in a whole number of equal usable parts, with a size to be found in between some previously established margins, these minimum and maximum sizes can be generated by rounding off to the nearest whole corresponding to the fraction resulting from the division of the length of the green bean after trimming, by the size we will call objective (in the case of the green beans the objective size can be 30 mm), or either by reading these margins from a previously established table.

In a practical example and supposing that the size of green bean J2 is 107 mm once trimmed its ends and being the objective size the one already indicated of 30 mm, when dividing 107 mm by 30 mm, the result is 3,566 mm which is rounded off to four. If green bean J2 has to be divided into four parts, each part should measure 26,75 mm (107 mm/4 = 26,75 mm).

The size of 26,75 mm of each part corresponds to an operation frequency of 112,15 KHz, reached after applying the following formula:

$$\text{Operation frequency} = \frac{\text{central frequency}}{\text{size of each part}} \times \text{objective size}$$

$$\text{Operation frequency} = \frac{100 \text{ KHz}}{26,75 \text{ mm}} \times 30 \text{ mm} = 112,15 \text{ KHz}$$

This means that for each green bean a stable calculated frequency should be generated in the way indicated here above and that the rotation speed of the cutting header (1), between the initial end and the final one of a green bean will exclusively depend on the length of the latter and the number of parts to be achieved from that concrete unit.

Between the last cut of a green bean and the first one of the following one, the header (1) should carry out a whole number of complete rotations and end up the manoeuvre at the frequency of the following green bean. This means that the number of pulses to be received by the electronic unit of each engine (1.8), between the last cut of a green bean till the first one of the following one, should be equal to or a multiple of the pulses which are equivalent to one complete rotation. The number of pulses equivalent to one complete rotation is a constant value for each machine.

With reference to the diagrams of figure 11, on the upper diagram the area indicated with reference "a" is equivalent to the real angle gone through during a complete rotation of the header (1); while on the lower diagram area "b" is equivalent to the number of pulses generated during a complete rotation of the cutting header (1).

At constant speed of the conveyor (3) and leaving enough stabilization time after each frequency change, and taking into account that there is a direct relationship between the number of pulses generated and the rotation angle of the header (1), both areas "a" and "b" are completely proportional for each machine; so that if a frequency F3 is generated during a period P1-P2, the area indicated with reference "B" will be equivalent or will be a multiple of area "b", then it is reached that the cutting header (1) passes through a point which we will call the cutting position and which will be the same point it passed through at the moment of the last cut of green bean J1 and the same point it will pass through when starting with green bean J2; in the way that it will carry out the cut exactly at the beginning of green bean J2, reaching this way that the area "A" is equal to or a multiple of area "a".

In this way and starting from a concrete value P1-P2, the calculation of F3 is simply reduced to a proportion between the areas. Should there be several possible ones, the value of F3 with the least possible brisk manoeuvres for the engines (1.8) will be chosen, i.e. the one which allows some smaller frequency jumps.

The election of the width of P1-P2 will be given by one or more of the following factors:

- As a general criterium, a width of P1-P2 will be used as being half the margin between the end of one green bean and the beginning of the following one.
- Between P2 and the beginning of green bean J2 there will be enough time for the engine (1.8) of this track to pass through the whole corresponding angle at the pulses it has received and to stabilize its speed at the speed corresponding to F2; in the way that the election of the mentioned time will depend on the angular acceleration reached in each system, being it possible to reduce P2-P1 to increase the stabilization time.
- The frequency of F3 will be limited at the upper part to the maximum speed of the cutting header (1) and at the lower part so that the cutting header 1 will never be stopped by the speed oscillation before stabilizing. This can make it necessary to increase the value of P2-P1 to reach valid manoeuvres between the nearest green beans.

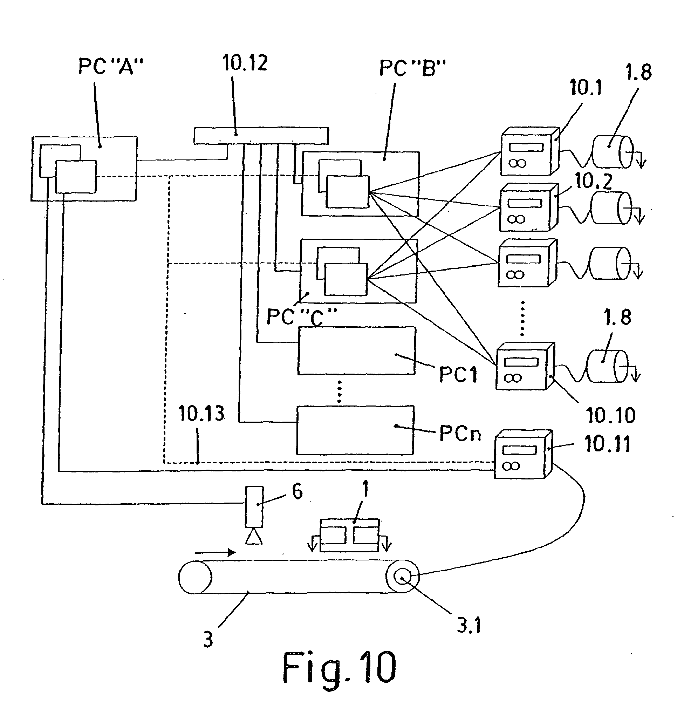

Referring to the electronics of the machine, figure 10 represents a general block diagram in which, with reference PC "A" a personal computer is identified having a counting card and a video capturing card. This PC "A" issues data to the computers PC1 and PCn at its maximum cyclic speed, in the following way: encoder position, width of the green bean in track one, width of the green bean in track two, width of the green bean in track three, ..., width of the green bean in track ten. This PC "A" also controls the speed of conveyor (3) through the controller (10.11).

Reference (10.12) corresponds to an "ethernet hub"; while reference PC "B" refers to a computer which commands the engines (1.8). This PC "B" has the cards of counters (10.1) to (10.10) of the ten engines (1.8) of the cutting headers (1). Computer PC "B" changes the frequency of the pulse trains in function of the commands received from computers PC1 to PCn and it receives data from the latter, once for the change of frequency, in the following format: encoder position, number of header, new frequency, beginning and end of the green bean.

Reference PC "C" indicates a verification computer for the instantaneous position of the cutting header (1). This PC "C" observes, at its maximum cyclic speed, when the engine (1.8) encoder passes through its zero point or the cutting point and sends this datum, header position encoder conveyor (3) to the computer PC "B", so that the latter can correct the frequencies and allow to compensate the lost of advanced pulses.

The computers PC1 to PCn receive the size of the width of the green beans from computer PC "A" and execute the control algorhythm, sending the new frequencies with the corresponding encode position to PC "B".

Depending on the used speed of PC1 to PCn and the algorhythm yield, a minimum of one only computer PC1 for the ten cutting headers (1) to a maximum of ten computers, PC1 to PC10, will be needed so that each of these computers correspond to a path.

Reference (10.13) indicates the issue of the encoder position of conveyor (3) from the conveyor (3) controller (10.11) to the counter cards (10.1) to (10.10) of the engines (1.8).

It has to be indicated that even if on the joined drawings a practical realization of a machine which includes the execution of its cutting header (1), in the way it has been described, these cutting headers (1) can have other realization versions, with which the essentiality of the invention is not changed in anything.

In fact, it has been foreseen that with the same concept of the machine, the cutting headers (1) can act in an oscillating movement in a horizontal plane, instead of in a rotary way; so that each horizontal sweeping and passage through a reference point, the cutting of the green bean is initiated. With this solution or with analogue movements which do not imply the need of continuous rotation of the cutting header (1), the use of rotary couplings (1.1) would then not be necessary, but the essentiality of the machine and the cutting method it brings about would invariably be maintained.

Also and in the way it has been indicated, the number of tracks can vary, in function of the volume of work to be carried out with the machine, wherefore the number of cutting headers (1) will be in function of the tracks.

Although along this numeric report green beans have been referred to, as an application example, this machine allows the cutting of any other elongated vegetable or even other elongated products which are not vegetables, being it possible to carry out the mentioned cutting to fraction the product to be cut, for its ends to be trimmed and/or for its calibration into longitudinal dimensions.

**Claims**

**1.** Vegetable cutting machine and cutting method obtained with said machine, of the kind of machine destined to trimming and/or the chopping of vegetables, situated after a vibrating conveyor, which makes up a series of tracks where the vegetables to be cut are lined up, to reach this way some conveyors (3 and 5) of the machine itself, which show tracks like the vibrating conveyor and which because of their different speed, separate the vegetables of each path from one another, **characterized in that** on the conveyor (3) a group of cutting headers (1) is situated, by means of a high pressure water jet, being there a cutting header (1) for each track; and **in that** in front of this group of cutting headers (1) there is a lineal television camera (6) which scans the width and the length of the vegetables, as well as the separation between them, commanded, through the corresponding electronics, to some engines (1.8) of the cutting heads and to an engine (3.1) of the conveyor (3); so that the high pressure water jet of each cutting head (1) trims of the vegetable if this is needed and it is subsequently cut into a whole number of identical parts, whose size will be the nearest to an target size.

2. Vegetable cutting machine and cutting method obtained with said machine, according to the previous claim, **characterized in that** according to a preferable realization, each cutting head (1) is made up of a rotary high pressure coupling (1.1), connected to a rotary central body (1.9), from which at least one nozzle (1.11) stands out radially for the high pressure water jet; this central rotary body (1.9), through which a connection (1.7) is joined to its corresponding driving engine (1.8).

3. Vegetable cutting machine and cutting method obtained with said machine, according to the first and second claims, **characterized in that** the engine (1.8) control and its synchronism with conveyor (3) engine (3.1) is established making the movement of all of this is controlled by the generation of pulses, with a direct relationship between the number of pulses received by the electronic module (10.1 to 10.11) of each engine (1.8) and (3.1) and the rotated angle of the same, reaching this way a control of its position; while the frequency of the mentioned pulses allows the control of its speed.

4. Vegetable cutting machine and cutting method obtained with said machine, according to the first and second claims, **characterized in that** the machines incorporates some sucking means which end up in some sucking openings situated exactly under the conveyor (3), in the cutting area of each track, to maintain this way the vegetable held to the conveyor (3) during the cutting operation, assuring its precision.

5. Vegetable cutting machine and cutting method obtained with said machine, according to the first and second claim, **characterized in that** it has been foreseen that each cutting header (1) shows at its nozzle (1.11) housed in a specific camera defined between both half-covers (1.3 and 1.4), with an encircling intermediate frame (1.10) which fulfils protecting functions, presenting the latter an opening at the radial area where the high pressure water jet has to operate to cut the vegetable.

6. Vegetable cutting machine and cutting method obtained with said machine, the mentioned cutting process is **characterized in that** the chopping of the vegetable to be cut is carried out dividing the vegetable in a whole number of identical parts, reaching the whole number of parts corresponding to each vegetable by means of the rounding off to the nearest whole number resulting from dividing the length of the vegetable, once trimmed, between the objective measure taken as a reference; or else reading those margins from a previously established table.

7. Vegetable cutting machine and cutting method obtained with said machine, according to the sixth claim, **characterized in that** once the number of identical parts in which the vegetable is to be cut is reached, once trimmed, the exact size of the mentioned part is got and finally the operation frequency for that vegetable, obtained from the application of the formula consisting in dividing the previously established central frequency between the size of each part and multiplying the result by the previously established target size.

8. Vegetable cutting machine and cutting method obtained with said machine, according to the sixth and seventh claim, **characterized in that** between the last cut of a vegetable and the first cut of the following one, the cutting header (1) carries out a whole number of complete rotations, starting the manoeuvre at the operation frequency of the first vegetable and ending the manoeuvre at the operation frequency of the second vegetable.

Fig. 1

Fig. 2

Fig. 3

Fig. 4

Fig. 7

Fig. 5

Fig. 6

Fig. 8

Fig.9

1.1  1.2  1.3  1.9  1.5  1.10  1.4  1.7  1.8  1.6  1.11

EP 1 410 723 A1

Fig.10

Fig.11

## INTERNATIONAL SEARCH REPORT

| | International application No. |
|---|---|
| | PCT/ES/01/00358 |

| A. CLASSIFICATION OF SUBJECT MATTER |
|---|
| CIP $^7$ A23N 15/12 |
| According to International Patent Classification (IPC) or to both national classification and IPC |

| B. FIELDS SEARCHED |
|---|
| Minimum documentation searched (classification system followed by classification symbols) |
| CIP $^7$ A23N 15/12, B26D 3/26, B24C |
| Documentation searched other than minimum documentation to the extent that such documents are included in the fields searched |
| Electronic data base consulted during the international search (name of data base and, where practicable, search terms used) |
| EPODOC, WPI, PAJ, OEPMPAT |

| C. DOCUMENTS CONSIDERED TO BE RELEVANT | | |
|---|---|---|
| Category* | Citation of document, with indication, where appropriate, of the relevant passages | Relevant to claim No. |
| X | US 4875254 A (RUDY et al.) 24.10.1989, column 3, line 25-column 4, | 6 |
| Y | line 42, column 5, line 1-column 6, line 7, figures 1,2,9 | 1 |
| X | US 4656904 A (RAYMENT) 14.04.1987, column 3, lines 10-17, figure 1 | 6 |
| Y | | 1 |
| A | FR 2112736 A (FRANCO EUROP. MATERIEL IND. ALIMENTAIRE) 23.06.1972, the whole document | 1 |
| A | GB 2045837 A (FLETCHER) 05.11.1980, page 1, lines 83-106 | 2 |
| A | EP 0796706 A (DESIGN SYS.) 24.09.1997, abstract, figures 1A,1B,3 | 5 |

| ☐ Further documents are listed in the continuation of Box C. | ☒ See patent family annex. |
|---|---|

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier document but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 21 December 2001 (21.12.01) | 04 January 2002 (04.01.02) |

| Name and mailing address of the ISA/ | Authorized officer JAVIER OLALDE SÁNCHEZ |
|---|---|
| S.P.T.O. | |
| Facsimile No. | Telephone No. 34 91 3495386 |

Form PCT/ISA/210 (second sheet) (July 1992)

## INTERNATIONAL SEARCH REPORT
Information on patent family members

| | International Application No |
|---|---|
| | PCT/ES/01/00358 |

| Patent document cited in search report | Publication date | Patent familiy member(s) | Publication date |
|---|---|---|---|
| US 4875254 A | 24.10.1989 | WO 8908983 A<br>AU 3343289 A<br>NO 904138 A<br>DK 230690 A<br>US 4962568 A<br>EP 0412973 A<br>NZ 228432 A<br>JP 3505813 T<br>US RE33851 E<br>US RE33904 E<br>CA 1307719 A | 05.10.1989<br>16.10.1989<br>21.09.1990<br>24.09.1990<br>16.10.1990<br>20.02.1991<br>28.05.1991<br>19.12.1991<br>17.03.1992<br>28.04.1992<br>22.09.1992 |
| US 4656904 A | 14.04.1987 | NONE | |
| FR 2112736 A | 23.06.1972 | NONE | |
| GB 2045837 A | 05.11.1980 | NONE | |
| EP 0796706 A | 24.09.1997 | CA 2200378 A<br>NO 971289 A<br>NO 309971 B<br>AU 1641597 A<br>AU 708012 B<br>NZ 314443 A<br>US 5927320 A<br>US 5931178 A | 19.09.1997<br>22.09.1997<br>30.04.2001<br>25.09.1997<br>29.07.1999<br>25.02.1999<br>27.07.1999<br>03.08.1999 |

Form PCT/ISA/210 (patent family annex) (July 1992)